# FASCICULE DE BREVET EUROPEEN

(11) **EP 3 963 757 B1**
(45) Date de publication et mention de la délivrance du brevet: **19.07.2023**
(21) Numéro de dépôt: 21725567.8
(22) Date de dépôt: 15.04.2021
(51) Int. Cl.: H04B 7/185

(54) **PROCÉDÉ ET DISPOSITIF RÉCEPTEUR POUR DÉTECTER LE DÉBUT D'UNE TRAME D'UN SIGNAL DE COMMUNICATIONS PAR SATELLITE**
VERFAHREN UND EMPFANGSVORRICHTUNG ZUM ERFASSEN DES ANFANGS EINES FRAMES EINES SATELLITENKOMMUNIKATIONSSIGNALS
METHOD AND RECEIVER DEVICE FOR DETECTING THE START OF A FRAME OF A SATELLITE COMMUNICATIONS SIGNAL

(30) Priorité: 16.04.2020 FR 2003838
(43) Date de publication de la demande: 09.03.2022
(73) Titulaire: Airbus Defence and Space SAS, 31402 Toulouse Cedex 4 (FR)
(72) Inventeur: BARTHE, Lyonel, 31402 TOULOUSE Cedex 04 (FR); GADAT, Benjamin, 31402 TOULOUSE Cedex 04 (FR)
(74) Mandataire: Ipside
(86) Numéro de dépôt international: PCT/FR2021/050659
(87) Numéro de publication internationale: WO 2021/209719

(56) Documents cités:
- US-A1- 2009 037 792
- US-A1- 2012 195 401

## Description

### Domaine de l'invention

La présente invention appartient au domaine des communications par satellite. Plus particulièrement, l'invention concerne un procédé et un dispositif récepteur pour détecter le début d'une trame d'un signal de communications par satellite.

### Etat de la technique

Les communications par satellite reposent sur des signaux radioélectriques échangés entre un satellite et une station au sol, ou bien entre deux satellites. Un signal de communication par satellite comporte généralement des trames de données qui peuvent être transmises de façon continue (« continuous transmission » dans la littérature anglo-saxonne) ou par paquets (« burst transmission »).

Les communications par satellite doivent présenter un taux d'erreurs sur les trames reçues (FER pour « Frame Error Rate » dans la littérature anglo-saxonne) particulièrement bas. En effet, il n'est généralement pas approprié, pour les communications par satellite, d'utiliser des mécanismes de retransmission des trames non reçues ou erronées. Cela s'explique notamment par le délai important de transmission en raison de la distance séparant l'émetteur (par exemple un satellite) et le récepteur (par exemple une station au sol).

Il existe actuellement plusieurs standards de communications par satellite, notamment la norme DVB-S2 (acronyme anglais de « Digital Video Broadcasting - Satellite 2 ») qui permet la diffusion de la télévision numérique par satellite au grand public. Dans le protocole DVB-S2, les trames de données sont transmises de façon continue, et des méthodes classiques de synchronisation, comme par exemple l'algorithme de Gardner, sont utilisées pour maintenir la synchronisation des symboles après échantillonnage du signal (voir par exemple l'annexe C de la spécification ETSI TR 102 376-1 v1.2.1 qui préconise l'utilisation de l'algorithme de Gardner).

Les méthodes de réception conventionnellement mises en oeuvre pour recevoir un signal DVB-S2 ne sont cependant pas bien adaptées pour recevoir un signal de communications par satellite transmis par paquets. Quand les trames sont transmises par paquets, deux trames successives peuvent être séparée par une période de temps dans laquelle seul du bruit est observable sur le signal. Il devient alors nécessaire de détecter avec précision le début d'une trame.

Les méthodes classiques envisageables pour adapter une méthode de réception d'un signal DVB-S2 à la réception d'un signal transmis par paquets conduisent à des architectures particulièrement complexes et coûteuses pour le dispositif récepteur.

Il n'existe actuellement pas de méthode satisfaisante permettant la synchronisation d'une trame d'un signal de communications par satellite présentant une faible complexité et supportant un fonctionnement en transmission par paquets.

La norme DVB-RCS (acronyme anglais pour « Digital Video Broadcasting - Return Channel via Satellite ») définit une voie de retour pour les communications DVB-S2 qui sont principalement monodirectionnelles. La norme DVB-RCS utilise une transmission de trames par paquets. Toutefois, les dispositifs récepteurs mettant en oeuvre la norme DVB-RCS sont particulièrement complexes et coûteux. Ceci est d'autant plus vrai dans un contexte de forte mobilité. C'est le cas notamment pour un canal de communication avec un satellite en orbite basse (LEO pour « Low Earth Orbit » dans la littérature anglo-saxonne).

La demande de brevet US 2009/037792 A1 décrit un système de réception d'un signal de diffusion. Le système de réception comporte un détecteur configuré pour détecter une séquence connue dans les données transportées par le signal de diffusion, et un égaliseur de canal configuré pour effectuer une égalisation de canal sur les données reçues en utilisant la séquence connue détectée. Ce système n'offre cependant pas toujours un compromis satisfaisant en termes de simplicité (faible coût) et de fiabilité, notamment pour des communications par satellite.

Pour présenter une fiabilité suffisante, les systèmes de réception de l'art antérieur comportent généralement plusieurs corrélateurs complexes. La demande de brevet US 2012/0195401 A1 vise à limiter le nombre de ces corrélateurs pour réduire la complexité et donc le coût du système de réception. Un tel système n'offre cependant pas toujours une fiabilité suffisante, notamment pour des communications par satellite

### Exposé de l'invention

La présente invention a pour objectif de remédier à tout ou partie des inconvénients de l'art antérieur, notamment ceux exposés ci-avant, en proposant un procédé et un dispositif récepteur pour détecter le début d'une trame d'un signal de communications par satellite pour lesquels la complexité est significativement réduite.

A cet effet, et selon un premier aspect, il est proposé par la présente invention, un procédé pour détecter le début d'une trame d'un signal de communications. La trame comporte un préambule correspondant à une séquence prédéterminée de symboles binaires. Le procédé comporte :
- un échantillonnage du signal,
- un filtrage de mise en forme des échantillons obtenus directement en sortie de l'échantillonnage,
- une première phase pour estimer une erreur fréquentielle approximative du signal et un premier échantillon candidat pour le début de la trame, ladite première phase comportant :
   ∘ pour chacune d'une pluralité d'hypothèses de fréquence prédéterminées : une corrélation entre les échantillons obtenus après filtrage de mise en forme et une partie au moins du préambule,
   ∘ une estimation d'une part d'un premier échantillon candidat pour le début de trame correspondant à un échantillon pour lequel la meilleure valeur de corrélation obtenue parmi les différentes hypothèses de fréquence est supérieure à un seuil prédéterminé, et d'autre part de l'erreur fréquentielle approximative à partir de l'hypothèse de fréquence ayant fourni la meilleure valeur de corrélation,
- une sauvegarde temporelle des échantillons obtenus en sortie de l'échantillonnage ou en sortie du filtrage de mise en forme dans une mémoire tampon pendant que la première phase est exécutée,
- une deuxième phase pour estimer avec précision un échantillon candidat final pour le début de la trame, ladite deuxième phase comportant :
   ∘ une correction fréquentielle appliquée aux échantillons obtenus en sortie de la mémoire tampon, ladite correction fréquentielle étant déterminée à partir de l'erreur fréquentielle approximative estimée à la première phase,
   ∘ une corrélation entre les échantillons corrigés et le préambule pour un ensemble limité d'échantillons comprenant le premier échantillon candidat,
   ∘ une détermination de l'échantillon candidat final pour le début de la trame correspondant à l'échantillon pour lequel la meilleure valeur de corrélation est obtenue.

Le procédé selon l'invention se distingue notamment des procédés conventionnels de réception d'un signal de communications selon le standard DVB-S2 par le fait qu'un filtrage de mise en forme est « directement » appliqué sur les échantillons obtenus en sortie de l'échantillonneur, c'est-à-dire notamment avant qu'une correction fréquentielle ne soit appliquée auxdits échantillons.

Le préambule de la trame est connu à la fois par le dispositif émetteur et par le dispositif récepteur. Chaque bit du préambule est codé par un symbole binaire en utilisant par exemple une modulation de type BPSK (acronyme anglais de « Binary Phase Shift Keying »).

L'application en amont d'un filtre de mise en forme d'une part, et l'utilisation d'un préambule modulé par une modulation binaire d'autre part, permettent de simplifier significativement les calculs de corrélation effectués pendant la première phase entre le signal reçu et le préambule attendu. En effet, les corrélateurs utilisés n'ont alors plus besoin d'implémenter des multiplicateurs (des additionneurs sont suffisants). De telles dispositions permettent de réduire significativement la complexité matérielle du dispositif récepteur mettant en oeuvre le procédé selon l'invention. Les corrélateurs représentent en effet à eux seuls la majeure partie (jusqu'à 80%, voire même jusqu'à 90%) de la complexité matérielle de la chaîne de réception de signal du dispositif récepteur (sans prendre en compte le décodeur dont la complexité dépend fortement de la technologie utilisée).

La première phase permet d'estimer une erreur fréquentielle approximative du signal et un premier échantillon candidat pour le début de la trame en faisant plusieurs hypothèses prédéterminées sur une erreur fréquentielle subie par le signal. A partir de ces éléments, la deuxième phase permet alors de déterminer avec précision un échantillon candidat final correspondant à un instant de début de la trame.

Les corrélations effectuées pendant la première phase, pour les différentes hypothèses fréquentielles prédéterminées, sont exécutées en continu (« stream processing » dans la littérature anglo-saxonne), jusqu'à la détection d'un candidat valide. La corrélation effectuée pendant la deuxième phase est en revanche opérée pour une seule fréquence, dans une fenêtre d'échantillons autour de l'échantillon candidat estimé par la première phase. Les calculs de corrélation effectués pendant la deuxième phase sont donc limités à un petit ensemble d'échantillons comprenant le premier échantillon candidat, et pour une seule fréquence.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la première phase comporte en outre une décimation des échantillons obtenus en sortie du filtrage de mise en forme, avant les corrélations pour les différentes hypothèses de fréquence.

Cette étape de décimation des échantillons pendant la première phase, avant les calculs de corrélations effectués pour les différentes hypothèses de fréquence, contribue également à une diminution importante de la complexité matérielle des corrélateurs. Cette étape de décimation est notamment rendue possible grâce à l'application en amont du filtre de mise en forme qui joue également un rôle de filtre anti-repliement de spectre.

Dans des modes particuliers de mise en oeuvre, la sauvegarde temporelle des échantillons est effectuée en sortie du filtrage de mise en forme.

Dans des modes particuliers de mise en oeuvre, la sauvegarde temporelle des échantillons est effectuée en sortie de l'échantillonnage et la deuxième phase comporte en outre un filtrage de mise en forme des échantillons obtenus en sortie de la correction fréquentielle.

Dans des modes particuliers de mise en oeuvre, les corrélations effectuées pendant la première phase sont réalisées sur une partie seulement du préambule.

De telles dispositions permettent là encore de réduire la complexité matérielle du dispositif récepteur. Le fait d'utiliser un préambule tronqué pour les calculs de corrélation effectués pendant la première phase permet en effet de limiter le nombre d'hypothèses de fréquences à faire, et donc le nombre de corrélateurs à utiliser. En effet, plus la taille du préambule est grande, et plus une erreur de fréquence importante entraînera des inconsistances dans les calculs de corrélation. En d'autres termes, il peut devenir contre-productif d'utiliser un préambule de taille trop importante pour les calculs de corrélation de la première phase où l'on n'a pas encore d'information sur l'erreur fréquentielle subie par le signal. Utiliser la totalité du préambule pourrait par exemple nécessiter d'augmenter le nombre d'hypothèses de fréquence pour réduire l'écart fréquentiel entre deux hypothèses et s'assurer ainsi d'avoir au moins une hypothèse de fréquence qui corresponde suffisamment à l'erreur fréquentielle subie par le signal.

Dans des modes particuliers de mise en oeuvre, la première phase comporte en outre une réduction de la taille de l'ensemble de valeurs utilisées pour quantifier les échantillons obtenus après filtrage de mise en forme, avant d'effectuer les corrélations. Le cas échéant, cette étape de réduction de la taille de l'ensemble de valeurs utilisées pour quantifier les échantillons peut être effectuée après l'étape de décimation des échantillons obtenus en sortie du filtrage de mise en forme.

Réduire la quantification des échantillons utilisés pour les calculs de corrélation de la première phase est un autre moyen de réduire la complexité matérielle du dispositif récepteur. Une quantification réduite (correspondant par exemple à coder la valeur de chaque échantillon sur seulement quatre bits au lieu de huit ou seize bits) peut en effet être suffisante pour estimer de façon satisfaisante une erreur fréquentielle approximative subie par le signal et le premier échantillon candidat pour le début de la trame.

Dans des modes particuliers de mise en oeuvre, le nombre et les valeurs des hypothèses de fréquence sont prédéterminés en fonction d'un rapport signal sur bruit estimé, d'un taux d'erreur de trames maximal souhaité, et d'une erreur fréquentielle maximale envisagée.

Dans des modes particuliers de mise en oeuvre, la corrélation effectuée pendant la deuxième phase comporte une première corrélation sur une première partie du préambule et une deuxième corrélation sur une deuxième partie du préambule. Une valeur de corrélation finale est calculée en fonction des valeurs de corrélation obtenues respectivement pour la première corrélation et pour la deuxième corrélation.

Le préambule peut en effet être découpé en au moins deux parties distinctes, chaque partie conduisant à des calculs de corrélation séparés, afin d'offrir une meilleure robustesse contre une erreur de fréquence résiduelle. Comme expliqué précédemment, une erreur de fréquence résiduelle peut entraîner des inconsistances dans les résultats obtenus pour des calculs de corrélation utilisant un préambule de grande taille. Il est alors préférable de combiner différents résultats de corrélations partielles obtenus respectivement pour différentes parties du préambule pour définir une valeur de corrélation finale fiable.

Dans des modes particuliers de mise en oeuvre, la deuxième phase comporte en outre une estimation d'un délai fractionnel à ajouter où à soustraire à l'instant de l'échantillon candidat final pour déterminer le début de la trame. Le délai fractionnel correspondant à une fraction de la période d'échantillonnage. De telles dispositions permettent d'optimiser la précision de la détermination de l'instant de début de la trame.

Dans des modes particuliers de mise en oeuvre, la trame comporte une séquence de bits correspondant au préambule et une séquence de bits correspondant à des données utiles. La séquence de bits du préambule est modulée par une modulation BPSK, et la séquence de bits de données utiles est modulée par une modulation d'ordre supérieur pour laquelle un symbole de modulation code au moins deux bits. La séquence de bits de données utiles peut par exemple être modulée par une modulation QPSK (« Quadrature Phase Shift Keying ») pour laquelle un symbole code deux bits de données, une modulation 8PSK (« Eight Phase Shift Keying ») pour laquelle un symbole code trois bits de données, ou une modulation 16APSK (« Sixteen Amplitude and Phase Shift Keying ») pour laquelle un symbole code quatre bits de données. Il convient de noter que la trame peut également comporter des bits dits « pilotes » distribués tout au long de la trame pour faciliter la synchronisation. Il convient également de noter que d'autres modulations pourraient être envisagées. L'invention n'est nullement limitée à un contenu particulier de la trame ou à une modulation particulière.

Selon un deuxième aspect, la présente invention concerne un produit programme d'ordinateur comportant un ensemble d'instructions de code de programme qui, lorsqu'elles sont exécutées par un processeur, configurent ledit processeur pour mettre en oeuvre un procédé pour détecter le début d'une trame d'un signal de communications selon l'un quelconque des modes de mises en oeuvre précédents.

Selon un troisième aspect, la présente invention concerne un dispositif récepteur pour détecter le début d'une trame d'un signal de communications. La trame comporte un préambule correspondant à une séquence prédéterminée de symboles binaires. Le dispositif récepteur comporte un circuit de traitement comportant :
- un module d'échantillonnage pour échantillonner le signal,
- un filtre de mise en forme pour filtrer les échantillons obtenus directement en sortie du module d'échantillonnage,
- plusieurs corrélateurs associés respectivement à différentes hypothèses de fréquence, pour effectuer, pour les échantillons obtenus en sortie du filtre de mise en forme, et pour chaque hypothèse de fréquence, un calcul de corrélation avec une partie au moins du préambule,
- un module d'estimation configuré pour :
   ∘ estimer un premier échantillon candidat pour le début de trame correspondant à un échantillon pour lequel la meilleure valeur de corrélation obtenue parmi les différentes hypothèses de fréquence est supérieure à un seuil prédéterminé,
   ∘ estimer une erreur fréquentielle approximative à partir de l'hypothèse de fréquence ayant fourni la meilleure valeur de corrélation,
- une mémoire tampon pour sauvegarder temporellement les échantillons obtenus en sortie du module d'échantillonnage ou en sortie du filtre de mise en forme,
- un module de correction fréquentielle configuré pour appliquer aux échantillons obtenus en sortie de la mémoire tampon une correction fréquentielle déterminée à partir de l'erreur fréquentielle approximative estimée,
- un corrélateur configuré pour effectuer, pour chaque échantillon d'un ensemble limité d'échantillons corrigés comprenant le premier échantillon candidat, un calcul de corrélation avec le préambule,
- un module de détection configuré pour déterminer un échantillon candidat final pour le début de la trame correspondant à l'échantillon pour lequel la meilleure valeur de corrélation est obtenue.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le dispositif récepteur comporte en outre un module de décimation pour décimer les échantillons obtenus en sortie du filtre de mise en forme, avant traitement par les corrélateurs associés aux différentes hypothèses de fréquence.

Dans des modes particuliers de réalisation, la mémoire tampon sauvegarde temporellement les échantillons obtenus en sortie du filtre de mise en forme.

Dans des modes particuliers de réalisation, la mémoire tampon sauvegarde temporellement les échantillons obtenus en sortie du module d'échantillonnage et le dispositif récepteur comporte en outre un filtre de mise en forme des échantillons obtenus en sortie du module de correction fréquentielle.

Dans des modes particuliers de réalisation, les corrélateurs associés respectivement aux différentes hypothèses fréquentielles sont configurés pour faire des calculs de corrélation sur une partie seulement du préambule.

Dans des modes particuliers de réalisation, le dispositif récepteur comporte en outre un module de conversion pour réduire la taille de quantification des échantillons obtenus après le filtre de mise en forme. Le cas échéant, le module de conversion peut être placé après le module de décimation. Le module de conversion est placé avant traitement par les corrélateurs associés aux différentes hypothèses de fréquence.

Dans des modes particuliers de réalisation, le corrélateur est configuré pour effectuer un premier calcul de corrélation sur une première partie du préambule et un deuxième calcul de corrélation sur une deuxième partie du préambule. Une valeur de corrélation finale est calculée en fonction des valeurs de corrélation obtenues respectivement pour la première partie et pour la deuxième partie du préambule.

Selon un quatrième aspect, la présente invention concerne un satellite ou un aéronef comportant un dispositif récepteur selon l'un quelconque des modes de réalisation précédents. L'invention est en effet applicable non seulement à des communications par satellite, mais aussi à d'autres types de communications comme par exemple des communications entre une station au sol et un aéronef, entre deux aéronefs, entre un aéronef et un satellite, etc. On entend par aéronef tout appareil capable de se déplacer dans les airs (avion, drone, hélicoptère, etc.).

Selon un cinquième aspect, la présente invention concerne une station au sol comportant un dispositif récepteur selon l'un quelconque des modes de réalisation précédents.

### Présentation des figures

L'invention sera mieux comprise à la lecture de la description suivante, donnée à titre d'exemple nullement limitatif, et faite en se référant aux figures 1 à 6 qui représentent :
[Fig. 1] une représentation schématique de communications par satellite,
[Fig. 2] une représentation schématique d'un mode particulier de réalisation d'un dispositif récepteur selon l'invention pour détecter le début d'une trame d'un signal de communications par satellite,
[Fig. 3] une représentation schématique de différentes fréquences correspondant à des hypothèses de fréquence prédéterminées,
[Fig. 4] une représentation détaillée de plusieurs corrélations effectuées respectivement pour différentes hypothèses de fréquence, ainsi que de l'estimation d'une part d'un premier échantillon candidat pour le début de la trame et d'autre part d'une erreur fréquentielle approximative,
[Fig. 5] une représentation schématique d'une corrélation comportant un premier calcul de corrélation sur une première partie d'un préambule et un deuxième calcul de corrélation sur une deuxième partie dudit préambule,
[Fig. 6] une représentation schématique des principales étapes d'un mode particulier de mise en oeuvre d'un procédé selon l'invention pour détecter le début d'une trame d'un signal de communications par satellite,
[Fig. 7] une représentation schématique d'un autre mode particulier de réalisation d'un dispositif récepteur selon l'invention,
[Fig. 8] une représentation schématique des principales étapes d'un mode particulier de mise en oeuvre du procédé selon l'invention correspondant au mode particulier de réalisation décrit à la figure 7.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée d'un mode de réalisation de l'invention

Tel qu'indiqué précédemment, la présente invention porte sur la synchronisation, par un dispositif récepteur, d'une trame d'un signal de communications par satellite.

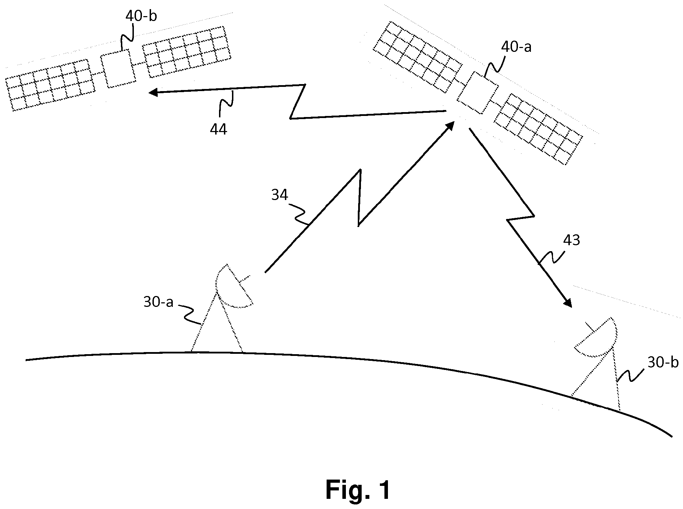

Tel qu'illustré par la figure 1, un signal de communications par satellite peut par exemple être émis par une station au sol 30-a sur un lien montant 34 à destination d'un satellite 40-a en orbite autour de la Terre. Dans un tel cas, le satellite 40-a peut comporter un dispositif récepteur selon l'invention pour détecter le début d'une trame contenue dans le signal.

Selon un autre exemple, le signal de communications par satellite est émis par le satellite 40-a sur un lien descendant 43 à destination d'une station au sol 30-b. Dans un tel cas, la station au sol 30-b peut comporter un dispositif récepteur selon l'invention pour détecter le début d'une trame contenue dans le signal.

Selon encore un autre exemple, le signal de communications par satellite peut être émis par le satellite 40-a à destination d'un autre satellite 40-b sur un lien inter-satellite montant 44. Dans un tel cas, le satellite 40-b peut comporter un dispositif récepteur selon l'invention pour détecter le début d'une trame contenue dans le signal.

L'invention est particulièrement bien adaptée pour des signaux de communications par satellite émis selon un mode de transmission par paquets (« burst-mode transmission »). Il convient toutefois de noter que rien n'empêche d'appliquer l'invention pour des signaux de communication émis selon un mode de transmission continue (« continuous-mode transmission »). L'invention est adaptée à la fois pour des méthodes de duplexage en fréquence (FDD pour l'acronyme anglais « Frequency-Division Duplexing ») et pour des méthodes de duplexage en temps (TDD pour « Time-Division Duplexing »). Aussi, l'invention peut être utilisée pour des communications par satellite de type transparent ou de type non transparent. Dans l'exemple illustré sur la figure 1, une communication entre la station au sol 30-a et la station au sol 30-b par l'intermédiaire du satellite 40-a est de type « transparent » si le satellite 40-a joue uniquement un rôle de répéteur vers la station au sol 30-b du signal reçu de la station au sol 30-a. Une communication entre la station au sol 30-a et la station au sol 30-b par l'intermédiaire du satellite 40-a est de type « non transparent » si le satellite 40-a démodule et décode le signal reçu de la station au sol 30-a avant de réémettre ce signal vers la station au sol 30-b.

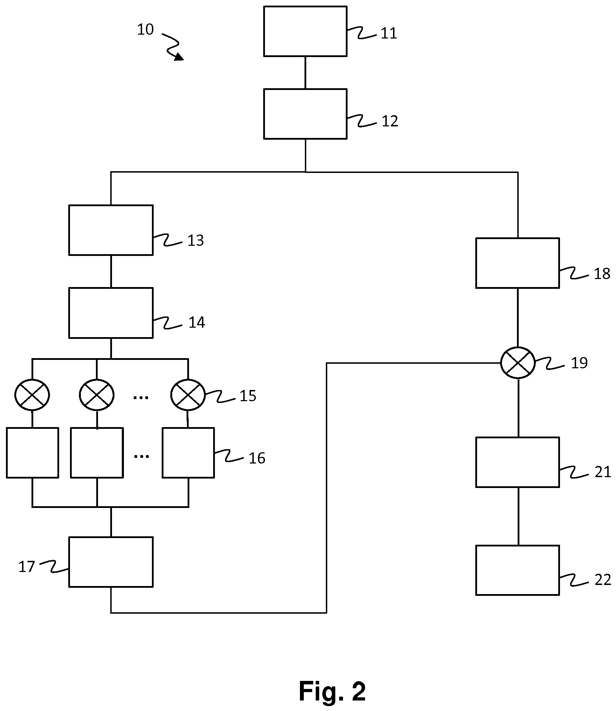

La figure 2 représente schématiquement un exemple d'un dispositif récepteur 10 selon l'invention.

Le dispositif récepteur 10 est configuré pour détecter le début d'une trame d'un signal de communication par satellite. Dans ce but, le dispositif récepteur 10 comporte par exemple un circuit de traitement comportant une chaîne de réception numérique avec une architecture de type radio logicielle (« Software Defined Radio » dans la littérature anglo-saxonne). Le circuit de traitement comporte par exemple un ou plusieurs processeurs et une mémoire dans laquelle est enregistrée un programme d'ordinateur qui comporte un ensemble d'instructions de code de programme qui, lorsqu'elles sont exécutées par le ou les processeurs, configurent le ou les processeurs pour mettre en oeuvre un procédé selon l'invention pour détecter le début d'une trame contenue dans le signal reçu.

Alternativement ou en complément, le dispositif récepteur 10 comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie des étapes du procédé de synchronisation d'une trame selon l'invention. En d'autres termes, le dispositif récepteur 10 comporte des moyens qui sont configurés de façon logicielle (produit programme d'ordinateur spécifique) et/ou matérielle (FPGA, PLD, ASIC, composants électroniques discrets, etc.) pour mettre en oeuvre les étapes du procédé selon l'invention.

Une trame comporte un préambule, des données utiles et éventuellement des bits pilotes. Le préambule correspond à une séquence prédéterminée de symboles binaires connue à la fois par le dispositif qui a émis la trame et par le dispositif récepteur. La séquence de bits du préambule est par exemple modulée par le dispositif émetteur par une modulation BPSK, pour laquelle chaque bit du préambule est codé par un symbole binaire. Pour augmenter le débit de transmission des données utiles, la séquence de bits correspondant aux données utiles peut quant à elle être modulée par une modulation d'ordre supérieur pour laquelle un symbole de modulation code plusieurs bits. Par exemple, une modulation QPSK permet de coder deux bits de données avec un seul symbole, une modulation 8PSK permet de coder trois bits de données avec un seul symbole, et une modulation 16APSK permet de coder quatre bits de données avec un seul symbole. D'autres modulations pourraient toutefois être envisagées.

A titre d'exemple nullement limitatif, on se place pour la suite de la description dans le cas où le préambule est une séquence Gold codée sur 256 symboles BPSK, et les données utiles de la trame sont codées sur 15360 symboles QPSK.

Tel qu'illustré sur la figure 2, le dispositif récepteur 10 comporte notamment un module d'échantillonnage 11 pour échantillonner le signal reçu ramené en bande de base. Le signal est échantillonné avec une fréquence d'échantillonnage au moins égale à la fréquence des symboles (dans le cas d'une modulation complexe) ou au moins égale à deux fois la fréquence des symboles (dans le cas d'une modulation réelle). Le module d'échantillonnage 11 met en oeuvre une méthode conventionnelle d'échantillonnage, considérée comme connue par l'homme du métier.

Tel qu'illustré sur la figure 2, les échantillons obtenus en sortie du module d'échantillonnage 11 sont filtrés par un filtre 12 de mise en forme. Ce filtre 12 de mise en forme est par exemple implémenté sous la forme d'un filtre en cosinus surélevé racine carrée (SRRC pour l'acronyme anglais « Square-Root Raised Cosine »). Il peut s'agir du même filtre que le filtre de mise en forme que celui utilisé par le dispositif émetteur lors de l'émission du signal.

L'échantillonnage peut être combiné avec une interpolation des échantillons par le filtre 12 de mise en forme pour obtenir un facteur de suréchantillonnage (OSF pour « Over Sampling Factor » dans la littérature anglo-saxonne) au moins égal à deux (au moins deux échantillons par symbole). A titre d'exemple nullement limitatif, on se place dans le cas d'un facteur de suréchantillonnage égal à quatre (OSF = 4) en sortie du filtre 12 de mise en forme. Un facteur de suréchantillonnage plus important (par exemple OSF = 8, ou OSF = 16) pourrait toutefois aussi être envisagé. Dans l'exemple considéré, chaque échantillon est codé sur huit bits. Cela signifie que l'ensemble des valeurs que peut prendre un échantillon comporte 2⁸ = 256 éléments. En d'autres termes, une quantification sur huit bits est utilisée lors de la conversion analogique-numérique des échantillons du signal. Là encore, rien n'empêche d'utiliser une quantification plus importante (par exemple une quantification sur seize bits). Différentes méthodes peuvent être envisagées pour obtenir un facteur de suréchantillonnage égal à quatre. Selon un premier exemple, une fréquence d'échantillonnage égale à quatre fois la fréquence des symboles est utilisée ; dans un tel cas, il n'est pas nécessaire de recourir à une interpolation des échantillons par le filtre 12 de mise en forme. Selon un deuxième exemple, une fréquence d'échantillonnage égale à deux fois la fréquence des symboles est utilisée, et une interpolation réalisée par le filtre 12 de mise en forme double le nombre d'échantillons obtenus. Selon un troisième exemple, une fréquence d'échantillonnage égale à la fréquence des symboles est utilisée, et une interpolation réalisée par le filtre 12 de mise en forme quadruple le nombre d'échantillons obtenus. Pour l'exemple décrit en référence aux figures 2 à 5, on se place à titre d'exemple nullement limitatif dans le cas où une modulation complexe est utilisée, la fréquence d'échantillonnage est égale à deux fois la fréquence des symboles, et une interpolation est réalisée par le filtre 12 de mise en forme pour doubler le nombre d'échantillons.

Il convient de noter que le filtrage de mise en forme est directement appliqué sur les échantillons obtenus en sortie de l'échantillonneur 11, avant qu'une correction fréquentielle ne soit appliquée auxdits échantillons. Dans une architecture conventionnelle d'une chaine de réception d'un signal de communications par satellite (et notamment tel que préconisé dans les recommandations DVB-S2), un filtre de mise en forme n'est appliqué qu'après une première correction fréquentielle sur les échantillons reçus. Dans l'invention, et comme cela sera détaillé par la suite, le fait de positionner le filtre 12 en amont d'une première correction fréquentielle est cependant particulièrement avantageux pour réduire la complexité matérielle du dispositif récepteur 10. Cela fonctionne bien pour des erreurs de fréquence inférieures ou égales à 10% de la fréquence du signal en bande de base. Dans le cas où des erreurs de fréquence plus importantes sont à envisager, il est possible d'ajouter une recherche de fréquence avec une fonction de « scan ». Selon un autre exemple, il est également envisageable d'utiliser plusieurs filtres de mise en forme en parallèle avec différentes fréquences.

De manière optionnelle, le dispositif récepteur 10 peut comporter également un module de décimation 13 pour décimer les échantillons obtenus en sortie du filtre 12 de mise en forme. La décimation consiste à ne garder qu'une partie des échantillons, par exemple un échantillon sur deux. Cette étape de décimation est notamment rendue possible grâce à l'application en amont du filtre 12 de mise en forme qui joue également un rôle de filtre anti-repliement de spectre. Cette étape de décimation peut optionnellement être accompagnée d'un rééchantillonnage basé sur une interpolation du signal pour garantir que le signal restant après décimation contient bien de l'information et qu'il n'est pas uniquement constitué de bruit. Dans l'exemple considéré, le module de décimation 13 supprime un échantillon sur deux, et on obtient en sortie un facteur de suréchantillonnage égal à deux (OSF = 2).

De manière optionnelle, le dispositif récepteur 10 peut comporter un module de conversion 14 configuré pour réduire la taille de quantification des échantillons obtenus en sortie du module de décimation 13. Par exemple, la quantification des échantillons peut être réduite à quatre bits. On entend par là qu'en sortie du module de conversion 14 la valeur de chaque échantillon est par exemple codée sur quatre bits, et non plus sur huit bits. Il convient de noter qu'une méthode de contrôle automatique du gain (AGC pour « Automatic Gain Control » dans la littérature anglo-saxonne) peut être utilisée lors de la conversion de l'amplitude des échantillons.

Le dispositif récepteur 10 comporte un ensemble de corrélateurs 16 associés respectivement à différentes hypothèses de fréquence. Les corrélateurs 16 sont configurés pour effectuer, pour chaque hypothèse de fréquence, pour les échantillons obtenus en sortie du filtre 12 de mise en forme (ou le cas échéant, en sortie du module de décimation 13 ou en sortie du module de conversion 14), un calcul de corrélation avec une partie au moins du préambule.

Le nombre et les valeurs des hypothèses de fréquence sont par exemple prédéterminés en fonction d'un rapport signal sur bruit estimé, d'un taux maximal d'erreurs de trames souhaité, et d'une erreur fréquentielle maximale envisagée pour le signal considéré. De façon assez intuitive, plus la valeur minimale envisageable du rapport signal sur bruit pour le signal considéré est faible, et plus le nombre d'hypothèses de fréquence doit être important. Similairement, plus la valeur maximale du taux d'erreurs de trames souhaitée est faible, et plus le nombre d'hypothèses de fréquence doit être important. Aussi, plus l'erreur fréquentielle maximale envisagée pour le signal considéré est grande, et plus le nombre d'hypothèses de fréquence doit être grand.

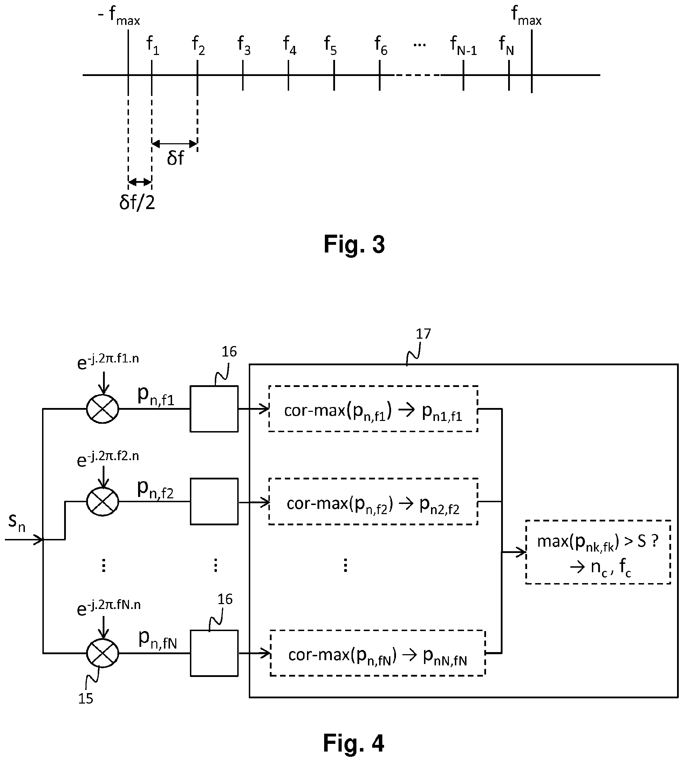

La figure 3 représente schématiquement différentes fréquences (f₁, f₂, f₃, ..., f_{N-1}, f_{N}) correspondant à des hypothèses de fréquence. On note N le nombre d'hypothèses de fréquence. Chaque hypothèse de fréquence correspond par exemple à une valeur possible d'une erreur fréquentielle observée par le dispositif récepteur 10 sur le signal. Cette erreur fréquentielle est par exemple due à un effet doppler engendré par un déplacement entre le dispositif émetteur et le dispositif récepteur l'un par rapport à l'autre. Un décalage fréquentiel et/ou une dérive fréquentielle entre une horloge du dispositif émetteur et une horloge du dispositif récepteur peut également contribuer à l'erreur fréquentielle observée par le dispositif récepteur sur le signal. Il est possible d'estimer une erreur fréquentielle maximale fₘₐₓ telle que l'erreur fréquentielle observée par le dispositif récepteur sur le signal reste généralement comprise entre -fₘₐₓ et fₘₐₓ (fₘₐₓ est par exemple déterminé en fonction d'une vitesse maximale de déplacement du dispositif émetteur relativement au dispositif récepteur, et/ou en fonction d'un décalage et/ou d'une dérive de fréquence maximal entre les horloges du dispositif récepteur et du dispositif émetteur). Tel qu'illustré sur la figure 3, N valeurs d'hypothèse de fréquences f₁ à f_{N} peuvent être définies dans l'intervalle de fréquences [-fₘₐₓ ; fₘₐₓ]. Dans l'exemple considéré, le nombre N est impair et deux hypothèses de fréquence consécutives sont séparées d'un écart δf valant (2 x fₘₐₓ) / N. Il y a alors autant d'hypothèses de fréquence positives que d'hypothèses de fréquence négatives (la valeur 0 ne faisant pas partie de l'ensemble des hypothèses de fréquence). Il convient toutefois de noter que la méthode décrite en référence à la figure 3 pour déterminer les hypothèses de fréquences n'est qu'un exemple et que d'autres méthodes pourraient être envisagées. Le choix d'une méthode particulière pour déterminer les hypothèses de fréquences ne constitue qu'une variante de l'invention.

Selon un premier exemple, un rapport signal sur bruit de 1 dB et une erreur fréquentielle maximale fₘₐₓ égale à 5% de la fréquence théorique du signal sont envisagés. Un critère de taux d'erreurs (FER) pour la synchronisation d'une trame inférieur à 10⁻⁶ est choisi. Il convient alors d'utiliser cinquante corrélateurs 16 (N = 50).

Selon un autre exemple, et toujours pour un critère de taux d'erreurs (FER) pour la synchronisation d'une trame inférieur à 10⁻⁶, un rapport signal sur bruit de 1 dB et une erreur fréquentielle maximale fₘₐₓ égale à 1,2% de la fréquence théorique du signal sont envisagés. Il convient alors d'utiliser douze corrélateurs 16 (N = 12).

Pour chaque hypothèse de fréquence, des calculs de corrélation sont effectués entre un ensemble d'échantillons et une séquence attendue d'échantillons correspondant au préambule (ou à une partie du préambule). Dans ce but, et tel qu'illustré sur la figure 4, les échantillons sₙ obtenus en sortie du module de décimation 13 (ou le cas échéant en sortie du module de conversion 14) sont copiés N fois, et pour chaque copie un module de correction fréquentielle 15 est configuré pour appliquer une correction fréquentielle correspondant à l'une des hypothèses de fréquence f₁ à f_{N}. Les N différentes versions des échantillons corrigés sont notés p_{n,f1}, p_{n,f2}, ..., p_{n,fN}. Des calculs de corrélation sont alors exécutés par les corrélateurs 16, pour chaque hypothèse de fréquence, entre la version correspondante des échantillons corrigés et le préambule. Chaque calcul de corrélation fournit en résultat une valeur de corrélation pour un échantillon donné et pour une hypothèse de fréquence donnée.

Un module d'estimation 17 est alors configuré pour déterminer la meilleure valeur de corrélation parmi l'ensemble des valeurs de corrélation obtenues pour un échantillon donné et pour les différentes hypothèses de fréquence. Un échantillon pour lequel la meilleure valeur de corrélation obtenue parmi les différentes hypothèses de fréquence est supérieure à un seuil S prédéterminé correspond alors à un premier échantillon candidat pour le début de la trame. Tel qu'indiqué précédemment, les calculs de corrélation effectués pour les différentes hypothèses de fréquence sont faits en continu jusqu'à ce qu'un premier échantillon candidat soit détecté.

La valeur du seuil S peut être prédéterminé en fonction d'une valeur maximale souhaitée pour le taux d'erreurs de trames (FER) pour un rapport signal sur bruit (SNR) donné. Des calculs de probabilité de non détection d'une trame et de probabilité de fausse détection d'une trame peuvent également être effectués, de façon conventionnelle, pour définir une valeur du seuil S.

Dans l'exemple illustré sur la figure 4, on note n₁ l'indice de l'échantillon p_{n1,f1} pour lequel on obtient la meilleure valeur de corrélation pour l'hypothèse de fréquence f₁, on note n₂ l'indice de l'échantillon p_{n2,f2} pour lequel on obtient la meilleure valeur de corrélation pour l'hypothèse de fréquence f₂, ..., et on note n_{N} l'indice de l'échantillon p_{nN,fN} pour lequel on obtient la meilleure valeur de corrélation pour l'hypothèse de fréquence f_{N}. On note alors n_{c} l'indice et f_{c} l'hypothèse de fréquence associés à l'échantillon p_{nc,fc} pour lequel on obtient la plus grande valeur de corrélation parmi les valeurs de corrélation associés respectivement aux échantillons p_{nk,fk}, avec k variant entre 1 et N. Si cette plus grande valeur de corrélation est supérieure au seuil S, alors p_{nc,fc} est un premier échantillon candidat pour le début de la trame, et f_{c} correspond à une erreur fréquentielle approximative du signal. On peut généralement s'attendre à ce que l'erreur fréquentielle réelle du signal soit comprise entre (f_{c} - δf/2) et (f_{c} + δf/2). Plus le nombre N d'hypothèses de fréquence est important, et plus la précision de l'estimation de l'erreur fréquentielle approximative est grande, mais plus le nombre de corrélateurs 16 et donc la complexité du dispositif récepteur 10 est grande.

Il est important de noter que les corrélateurs 16 représentent à eux seuls une très grande partie (entre 80% et 90%) de la complexité matérielle de la chaîne de réception du dispositif récepteur 10 (hors décodeur). L'application en amont du filtre 12 de mise en forme d'une part, et l'utilisation d'un préambule modulé par une modulation binaire d'autre part, permettent de simplifier significativement les calculs de corrélation et donc la complexité matérielle des corrélateurs 16. En effet, les corrélateurs 16 n'ont plus besoin d'implémenter des multiplicateurs (des additionneurs sont suffisants). Le fait d'avoir décimé les échantillons du signal reçu avant les calculs de corrélations effectués pour les différentes hypothèses de fréquence contribue également à une diminution importante de la complexité matérielle des corrélateurs. En effet, comme le nombre d'échantillons est réduit, le nombre de calculs de corrélation à effectuer est également réduit. La réduction de la quantification des échantillons mise en oeuvre par le module de conversion 14 est un autre moyen de réduire la complexité matérielle des corrélateurs 16.

Comme indiqué précédemment, il est préférable d'effectuer les calculs de corrélations sur une partie seulement du préambule, plutôt que sur la totalité du préambule. Le fait d'utiliser un préambule tronqué pour les calculs de corrélation permet en effet, là encore, de réduire la complexité matérielle du dispositif récepteur 10. Cela permet en effet de limiter le nombre d'hypothèses de fréquences à faire, et donc le nombre de corrélateurs à utiliser. En effet, plus la taille du préambule utilisé pour les calculs de corrélation est grande, et plus une erreur de fréquence importante entraînera des inconsistances dans les résultats de corrélation. En d'autres termes, il peut devenir contre-productif d'utiliser un préambule de taille trop importante pour les calculs de corrélation lorsque l'on n'a pas encore d'information sur l'erreur fréquentielle du signal.

Il convient de noter que les différents corrélateurs 16 ne correspondent pas nécessairement à des entités physiques distinctes, mais ils peuvent correspondre par exemple à des noyaux de corrélation différents implémentés par un même processeur.

Tel qu'illustré sur la figure 2, le dispositif récepteur 10 comporte une mémoire tampon 18 pour sauvegarder temporellement les échantillons obtenus en sortie du filtre 12 de mise en forme. Cette mémoire tampon 18 permet de compenser la latence due aux différents traitements permettant d'estimer l'erreur fréquentielle approximative du signal et le premier échantillon candidat pour le début de la trame.

Un module de correction fréquentielle 19 est configuré pour appliquer aux échantillons en sortie de la mémoire tampon 18 une correction fréquentielle déterminée à partir de l'erreur fréquentielle approximative estimée par le module d'estimation 17. Dans l'exemple considérée, cette correction fréquentielle est égale à l'erreur fréquentielle approximative f_{c}.

Un autre corrélateur 21 est alors configuré pour effectuer, pour chaque échantillon d'un ensemble limité d'échantillons corrigés comprenant le premier échantillon candidat, un calcul de corrélation avec le préambule (la totalité du préambule est utilisée pour cette corrélation). L'ensemble d'échantillons considérée comporte un nombre limité d'échantillons afin de limiter le nombre de calculs de corrélation effectués par le corrélateur 21. La taille de l'ensemble limité d'échantillons est par exemple égal à deux fois le facteur de suréchantillonnage plus un élément (2 x OSF + 1) Dans l'exemple considéré, pour lequel on a un facteur de suréchantillonnage OSF = 4, l'ensemble limité d'échantillons comporte par exemple le premier échantillon candidat d'indice n_{c} ainsi que les quatre échantillons précédents et les quatre échantillons suivants (c'est-à-dire les échantillons dont l'indice varie entre (n_{c} - n₀) et (n_{c} + n₀), avec n₀ = 4).

Un module de détection 22 est configuré pour déterminer l'indice nₛₜₐᵣₜ d'un échantillon candidat final correspondant au début de la trame. L'échantillon candidat final correspond à l'échantillon pour lequel la meilleure valeur de corrélation est obtenue parmi les valeurs de corrélation calculées par le corrélateur 21.

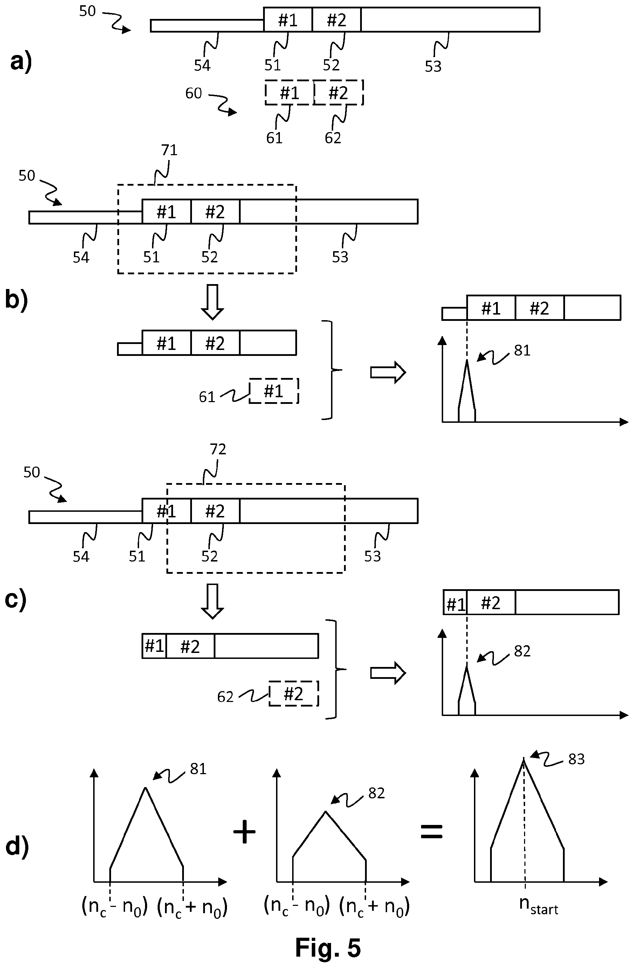

Dans des modes particuliers de réalisation, et tel qu'illustré sur la figure 5, la corrélation effectuée par le corrélateur 21 comporte une première corrélation sur une première partie du préambule et une deuxième corrélation sur une deuxième partie du préambule. Une valeur de corrélation finale est alors calculée en fonction des valeurs de corrélation obtenues respectivement pour la première corrélation et pour la deuxième corrélation.

La partie a) de la figure 5 représente schématiquement un signal reçu 50 par le dispositif récepteur 10. Le signal reçu 50 comporte du bruit 54 et une trame comportant une première partie 51 du préambule, une deuxième partie 52 du préambule, et des données utiles 53. La partie a) de la figure 5 représente également le préambule 60 théoriquement attendu par le dispositif récepteur, avec une première partie 61 du préambule et une deuxième partie 62 du préambule. La première partie 51, 61 et la deuxième partie 52, 62 du préambule correspondent par exemple chacune à une moitié du préambule. Dans l'exemple considéré, la première partie 61 comporte alors des échantillons correspondant aux 128 premiers symboles du préambule. La deuxième partie 62 comporte alors des échantillons correspondant aux 128 derniers symboles du préambule.

La partie b) de la figure 5 représente schématiquement une première corrélation effectuée entre la première partie 61 du préambule et un ensemble d'échantillons du signal reçu 50 contenus dans une fenêtre 71 de corrélation. Les calculs de corrélation sont effectués seulement pour les échantillons dont l'indice varie entre (n_{c} - n₀) et (n_{c} + n₀). Un pic de corrélation 81 est alors obtenu pour un échantillon donné parmi ces échantillons.

La partie c) de la figure 5 représente schématiquement une deuxième corrélation effectuée avec la deuxième partie 62 du préambule pour un ensemble d'échantillons du signal reçu 50 contenus dans une fenêtre 72 de corrélation décalée d'un nombre d'échantillons égal à la longueur de la séquence d'échantillons formant la première partie 61 du préambule 60. Là encore, les calculs de corrélation sont effectués seulement pour les échantillons dont l'indice varie entre (n_{c} - n₀) et (n_{c} + n₀). Un pic de corrélation 82 est alors obtenu pour un échantillon donné parmi ces échantillons.

La partie d) de la figure 5 illustre schématiquement le fait que les résultats de la première corrélation sont additionnés aux résultats de la deuxième corrélation. Un pic de corrélation 83 peut alors être déterminé pour les résultats finaux ainsi obtenus. Le pic de corrélation 83 est associé à un indice noté nₛₜₐᵣₜ de l'échantillon candidat final pour le début de la trame.

Le fait de découper le préambule en au moins deux parties distinctes, chaque partie conduisant à des calculs de corrélation séparés, permet d'obtenir une meilleure robustesse contre l'erreur de fréquence résiduelle. Comme expliqué précédemment, une erreur de fréquence non négligeable peut entraîner des inconsistances dans les résultats obtenus pour des calculs de corrélation utilisant un préambule de grande taille. Il est alors préférable de combiner différents résultats de corrélations partielles obtenus respectivement pour différentes parties du préambule pour définir une valeur de corrélation finale fiable.

Dans des modes particuliers de mise en oeuvre, il est en outre envisageable d'estimer d'un délai fractionnel à ajouter où à soustraire à l'instant de l'échantillon candidat final pour déterminer avec plus de précision le début de la trame. Le délai fractionnel correspond à une fraction de la période d'échantillonnage. Cela présente notamment un intérêt si le facteur de suréchantillonnage utilisé n'est pas particulièrement important (comme dans l'exemple considéré où l'on utilise un facteur de suréchantillonnage OSF = 4). Cela présente moins d'intérêt lorsqu'un facteur de suréchantillonnage plus important est utilisé (par exemple OSF ≥ 16). Aussi, lorsqu'un délai fractionnel doit être calculé, il est préférable d'utiliser une quantification suffisante des échantillons (par exemple sur huit bits, voire sur seize bits). Il existe différentes méthodes pour calculer un délai fractionnel, comme par exemple une méthode basée sur le barycentre des pics de corrélation, ou une méthode basée sur une interpolation de Lagrange.

Il convient de noter que les différents éléments représentés sur la figure 2 ne sont pas nécessairement tous des entités distinctes du dispositif récepteur 10. Plusieurs de ces éléments peuvent notamment être implémentés de façon numérique au sein d'un FPGA, PLD ou ASIC sous la forme d'algorithmes de type CORDIC (acronyme anglais pour « COrdinate Rotation Digital Computer », « calcul numérique par rotation de coordonnées ») ou au sein d'un même microcontrôleur de type ROM. En particulier, l'invention est bien adaptée à l'utilisation de techniques de multiplexage temporel (TDM pour « Time Division Multiplexing ») pour les calculs de correction de fréquence et pour les calculs de corrélation.

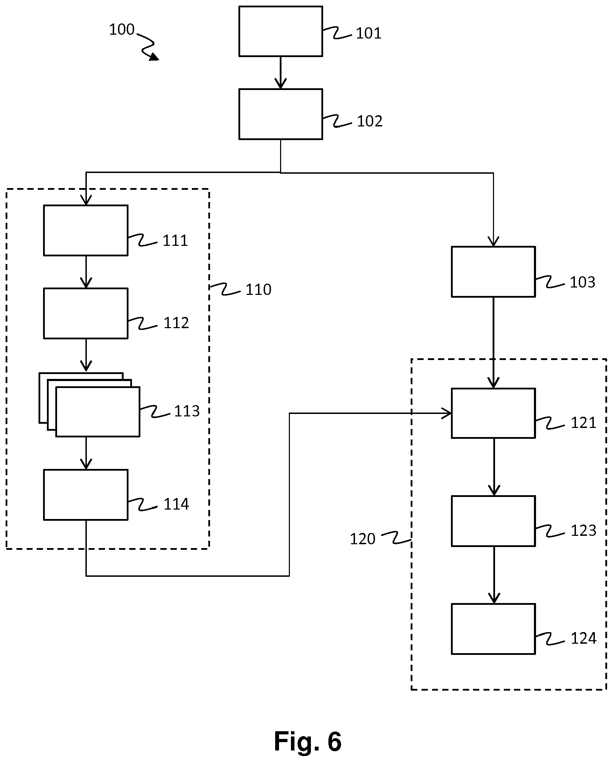

La figure 6 représente schématiquement les principales étapes d'un mode particulier de mise en oeuvre d'un procédé 100 selon l'invention pour détecter le début d'une trame d'un signal de communications par satellite. Ce procédé 100 est mis en oeuvre par le dispositif récepteur 10 précédemment décrit en référence aux figures 2 à 5.

Tel qu'illustré sur la figure 6, le procédé 100 comporte d'abord une étape d'échantillonnage 101 du signal.

Le procédé 100 comporte ensuite une étape de filtrage 102 de mise en forme des échantillons obtenus directement en sortie de l'étape l'échantillonnage 101.

Le procédé 100 est ensuite partagé entre une première phase 110 pour estimer une erreur fréquentielle approximative du signal et un premier échantillon candidat pour le début de la trame, et une deuxième phase 120 pour estimer avec précision un échantillon candidat final pour le début de la trame.

Optionnellement, la première phase 110 comporte une étape de décimation 111 des échantillons obtenus en sortie de l'étape de filtrage 102 de mise en forme.

Optionnellement, la première phase 110 comporte également une étape de réduction 112 de la taille de l'ensemble de valeurs utilisées pour quantifier les échantillons obtenus après l'étape de décimation 111.

Ensuite, pour chacune d'une pluralité d'hypothèses de fréquence prédéterminées, une corrélation 113 est effectuée entre les échantillons obtenus après l'étape de filtrage 102 de mise en forme (ou le cas échéant, après l'étape de décimation 111 ou après l'étape de réduction 112 de la quantification) et une partie au moins du préambule.

Une étape d'estimation 114 permet d'estimer d'une part un premier échantillon candidat pour le début de trame et d'autre part une erreur fréquentielle approximative du signal. Le premier échantillon candidat pour le début de trame correspond à un échantillon pour lequel la meilleure valeur de corrélation obtenue parmi les différentes hypothèses de fréquence est supérieure à un seuil prédéterminé. L'erreur fréquentielle approximative correspond à l'hypothèse de fréquence ayant fourni la meilleure valeur de corrélation. Une trame n'est détectée que si les calculs de corrélation permettent d'identifier au moins un échantillon pour lequel la valeur de corrélation calculée est supérieure au seuil.

Le procédé 100 comporte également une étape de sauvegarde 103 temporelle des échantillons obtenus en sortie de l'étape d'échantillonnage 101 ou en sortie de l'étape de filtrage 102 de mise en forme dans une mémoire tampon pendant que la première phase 110 est exécutée.

La deuxième phase 120 débute quand une erreur fréquentielle approximative du signal et un premier échantillon candidat pour le début de la trame ont été détectés au cours de la première phase 110.

La deuxième phase 120 comporte une étape de correction fréquentielle 121 appliquée aux échantillons obtenus en sortie du filtre de mise en forme. La correction fréquentielle 121 est déterminée à partir de l'erreur fréquentielle approximative estimée au cours de la première phase 110.

La deuxième phase 120 comporte également une corrélation 123 entre les échantillons corrigés obtenus en sortie de l'étape de correction fréquentielle 121 et le préambule. Cette corrélation 123 n'est cependant effectuée que pour un ensemble limité d'échantillons comprenant le premier échantillon candidat, afin de limiter le nombre de calculs de corrélation.

Enfin, une étape 124 permet de déterminer un échantillon candidat final pour le début de la trame. L'échantillon candidat final pour le début de la trame correspondant à l'échantillon pour lequel la meilleure valeur de corrélation est obtenue. L'instant de l'échantillon candidat final fournit une estimation précise de l'instant de début de la trame.

Les étapes ultérieures de la chaîne de réception de la trame ne sont pas décrites car elles vont au-delà de la portée de l'invention. Ces étapes ultérieures pourraient notamment comporter, de façon conventionnelle, une synchronisation précise en fréquence et un décodage de la trame.

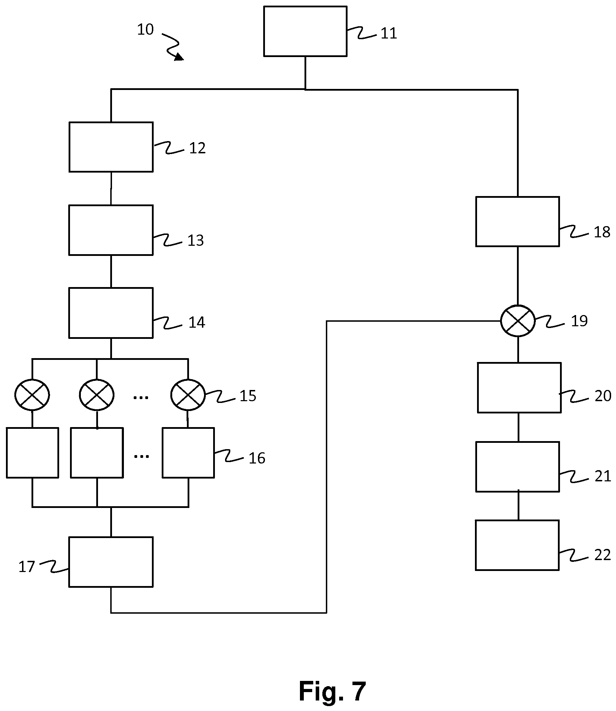

La figure 7 décrit un autre mode particulier de réalisation d'un dispositif récepteur 10 selon l'invention. La différence par rapport au mode particulier de réalisation décrit en référence à la figure 2 réside dans le fait que la mémoire tampon 18 mémorise les échantillons obtenus en sortie du module d'échantillonnage 11 (et non pas en sortie du filtre 12 de mise en forme). Un autre filtre de mise en forme 20 est alors utilisé pour filtrer les échantillons obtenus en sortie du module de correction fréquentielle 19, avant passage dans le corrélateur 21. De telles dispositions peuvent permettre d'améliorer les performances de synchronisation d'une trame, toutefois elles nécessitent une profondeur plus importante de la mémoire tampon 18. Pour le reste, le mode particulier de réalisation du dispositif récepteur 10 décrit en référence à la figure 7 est similaire à celui décrit en référence aux figures 2 à 5.

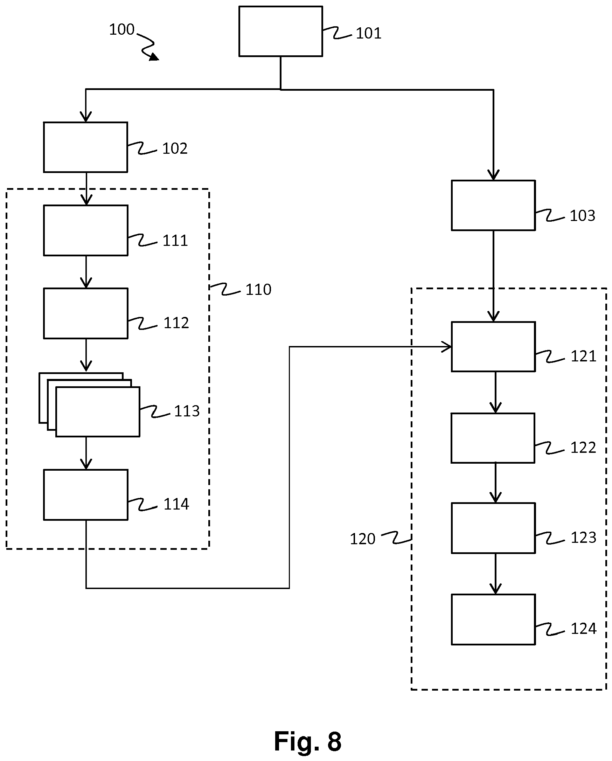

La figure 8 décrit les principales étapes d'un mode particulier de mise en oeuvre du procédé 100 selon l'invention correspondant au mode particulier de réalisation décrit à la figure 7. En particulier, la sauvegarde 103 temporelle des échantillons a lieu en sortie de l'étape d'échantillonnage 101 (et non en sortie de l'étape de filtrage 102 de mise en forme), et une étape de filtrage 122 de mise en forme des échantillons obtenus en sortie de la correction fréquentielle 121 est ajoutée. Pour le reste, le mode particulier de réalisation du dispositif récepteur 10 décrit en référence à la figure 8 est similaire à celui décrit en référence à la figure 6.

La description ci-avant illustre clairement que, par ses différentes caractéristiques et leurs avantages, la présente invention atteint les objectifs fixés. En particulier, la chaine de réception décrite en référence à la figure 2 présente une complexité matérielle réduite d'au moins un facteur dix, voire d'un facteur cent, par rapport à une architecture conventionnelle. Lorsque l'invention est mise en oeuvre sous la forme d'un FPGA, PLD ou ASIC, une implémentation de type CORDIC ou « ROM based » permet de faire les corrections de fréquence de manière efficace. Ces implémentations peuvent être couplées à des noyaux de corrélations qui peuvent également exploiter des techniques de type TDM.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, différentes méthodes considérées comme connues de l'homme du métier peuvent être envisagées pour chacune des différentes étapes du procédé 100 selon l'invention. L'invention se distingue principalement par la façon dont ces différentes étapes sont agencées. Ainsi, différentes méthodes peuvent être envisagées pour l'étape 101 d'échantillonnage, l'étape 102 de filtrage de mise en forme, l'étape 111 de décimation, l'étape 112 de réduction de la quantification, et les étapes 113 et 123 de corrélation. Le choix d'une méthode particulière pour l'une ou l'autre des ces étapes ne constitue qu'une variante de l'invention.

Aussi, différentes méthodes peuvent être envisagées pour définir le nombre et les valeurs des hypothèses de fréquences en fonction des conditions radio dans lesquelles l'invention est appliquée, ou bien pour définir la valeur du seuil de détection d'un premier échantillon candidat pour le début d'une trame. Là encore, le choix d'une méthode particulière ne constitue qu'une variante de l'invention.

L'invention a été principalement décrite dans le cadre de communications par satellite. Il convient cependant de noter que l'invention peut également s'appliquer d'autres types de communications, notamment des communications échangées entre une station au sol et un aéronef, ou entre deux aéronefs, ou entre un aéronef et un satellite.

## Revendications

1. Procédé (100) pour détecter le début d'une trame d'un signal de communications, ladite trame comportant un préambule correspondant à une séquence prédéterminée de symboles binaires, ledit procédé comportant :
• un échantillonnage (101) du signal,
• un filtrage (102) de mise en forme des échantillons obtenus directement en sortie de l'échantillonnage (101),
• une première phase (110) pour estimer une erreur fréquentielle approximative du signal et un premier échantillon candidat pour le début de la trame, ladite première phase (110) comportant :
∘ pour chacune d'une pluralité d'hypothèses de fréquence prédéterminées : une corrélation (113) entre les échantillons obtenus après filtrage (102) de mise en forme et une partie au moins du préambule,
∘ une estimation (114) d'une part d'un premier échantillon candidat pour le début de trame correspondant à un échantillon pour lequel la meilleure valeur de corrélation obtenue parmi les différentes hypothèses de fréquence est supérieure à un seuil prédéterminé, et d'autre part de l'erreur fréquentielle approximative à partir de l'hypothèse de fréquence ayant fourni la meilleure valeur de corrélation,
le procédé (100) étant **caractérisé en ce qu'**il comporte :
• une sauvegarde (103) temporelle des échantillons obtenus en sortie de l'échantillonnage (101) ou en sortie du filtrage (102) de mise en forme dans une mémoire tampon pendant que la première phase est exécutée,
• une deuxième phase (120) pour estimer avec précision un échantillon candidat final pour le début de la trame, ladite deuxième phase (120) comportant :
∘ une correction fréquentielle (121) appliquée aux échantillons obtenus en sortie de la mémoire tampon, ladite correction fréquentielle (121) étant déterminée à partir de l'erreur fréquentielle approximative estimée à la première phase,
∘ une corrélation (123) entre les échantillons corrigés et le préambule pour un ensemble limité d'échantillons comprenant le premier échantillon candidat,
∘ une détermination (124) de l'échantillon candidat final pour le début de la trame correspondant à l'échantillon pour lequel la meilleure valeur de corrélation est obtenue.

2. Procédé (100) selon la revendication 1 dans lequel la première phase (110) comporte en outre une décimation (111) des échantillons obtenus en sortie du filtrage (102) de mise en forme, avant les corrélations (113) pour les différentes hypothèses de fréquence.

3. Procédé (100) selon l'une des revendications 1 à 2 dans lequel la sauvegarde (103) temporelle des échantillons est effectuée en sortie du filtrage (102) de mise en forme.

4. Procédé (100) selon l'une des revendications 1 à 2 dans lequel la sauvegarde (103) temporelle des échantillons est effectuée en sortie de l'échantillonnage (101) et la deuxième phase (120) comporte en outre un filtrage (122) de mise en forme des échantillons obtenus en sortie de la correction fréquentielle (121).

5. Procédé (100) selon l'une des revendications 1 à 4 dans lequel les corrélations (113) effectuées pendant la première phase (110) sont réalisées sur une partie seulement du préambule.

6. Procédé (100) selon l'une des revendications 1 à 5 dans lequel la première phase (110) comporte en outre une réduction (112) de la taille de l'ensemble de valeurs utilisées pour quantifier les échantillons obtenus après filtrage (102) de mise en forme, avant d'effectuer les corrélations (113).

7. Procédé (100) selon l'une des revendications 1 à 6 dans lequel le nombre et les valeurs des hypothèses de fréquence sont prédéterminés en fonction d'un rapport signal sur bruit estimé, d'un taux d'erreur de trames maximal souhaité, et d'une erreur fréquentielle maximale envisagée.

8. Procédé (100) selon l'une des revendications 1 à 7 dans lequel la corrélation (123) effectuée pendant la deuxième phase (120) comporte une première corrélation sur une première partie du préambule et une deuxième corrélation sur une deuxième partie du préambule, une valeur de corrélation finale étant calculée en fonction des valeurs de corrélation obtenues respectivement pour la première corrélation et pour la deuxième corrélation.

9. Procédé (100) selon l'une des revendications 1 à 8 dans lequel la deuxième phase (120) comporte en outre une estimation d'un délai fractionnel à ajouter où à soustraire à l'instant de l'échantillon candidat final pour déterminer le début de la trame, ledit délai fractionnel correspondant à une fraction de la période d'échantillonnage.

10. Procédé (100) selon l'une des revendications 1 à 9 dans lequel la trame comporte une séquence de bits correspondant au préambule et une séquence de bits correspondant à des données utiles, la séquence de bits du préambule étant modulée par une modulation BPSK, la séquence de bits de données utiles étant modulée par une modulation d'ordre supérieur pour laquelle un symbole de modulation code au moins deux bits.

11. Produit programme d'ordinateur comportant un ensemble d'instructions de code de programme qui, lorsqu'elles sont exécutées par un processeur, configurent ledit processeur pour mettre en oeuvre un procédé (100) pour détecter le début d'une trame d'un signal de communications selon l'une des revendications 1 à 10.

12. Dispositif récepteur (10) pour détecter le début d'une trame d'un signal de communications, ladite trame comportant un préambule correspondant à une séquence prédéterminée de symboles binaires, le dispositif récepteur comportant un circuit de traitement comportant :
• un module d'échantillonnage (11) pour échantillonner le signal,
• un filtre (12) de mise en forme pour filtrer les échantillons obtenus directement en sortie du module d'échantillonnage (11),
• plusieurs corrélateurs (16) associés respectivement à différentes hypothèses de fréquence, pour effectuer, pour les échantillons obtenus en sortie du filtre (12) de mise en forme, et pour chaque hypothèse de fréquence, un calcul de corrélation avec une partie au moins du préambule,
• un module d'estimation (17) configuré pour :
∘ estimer un premier échantillon candidat pour le début de trame correspondant à un échantillon pour lequel la meilleure valeur de corrélation obtenue parmi les différentes hypothèses de fréquence est supérieure à un seuil prédéterminé,
∘ estimer une erreur fréquentielle approximative à partir de l'hypothèse de fréquence ayant fourni la meilleure valeur de corrélation,
le dispositif récepteur (10) étant **caractérisé en ce qu'**il comporte :
• une mémoire tampon (18) pour sauvegarder temporellement les échantillons obtenus en sortie du module d'échantillonnage (11) ou en sortie du filtre (12) de mise en forme,
• un module de correction fréquentielle (19) configuré pour appliquer aux échantillons obtenus en sortie de la mémoire tampon (18) une correction fréquentielle déterminée à partir de l'erreur fréquentielle approximative estimée,
• un corrélateur (21) configuré pour effectuer, pour chaque échantillon d'un ensemble limité d'échantillons corrigés comprenant le premier échantillon candidat, un calcul de corrélation avec le préambule,
• un module de détection (22) configuré pour déterminer un échantillon candidat final pour le début de la trame correspondant à l'échantillon pour lequel la meilleure valeur de corrélation est obtenue.

13. Dispositif récepteur (10) selon la revendication 12 comportant en outre un module de décimation (13) pour décimer les échantillons obtenus en sortie du filtre (12) de mise en forme, avant traitement par les corrélateurs (16) associés aux différentes hypothèses de fréquence.

14. Satellite (40) ou aéronef comportant un dispositif récepteur (10) selon l'une des revendications 12 à 13.

15. Station au sol (30) comportant un dispositif récepteur (10) selon l'une des revendications 12 à 13.

## Patentansprüche

1. Verfahren (100) zum Erfassen des Anfangs eines Frames eines Kommunikationssignals, wobei der Frame eine Präambel beinhaltet, die einer zuvor bestimmten Folge an binären Symbolen entspricht, wobei das Verfahren Folgendes beinhaltet:
• ein Abtasten (101) des Signals,
• ein Filtern (102) einer Formatierung der direkt am Ausgang des Abtastens (101) erhaltenen Samples,
• eine erste Phase (110) zum Schätzen eines ungefähren Frequenzfehlers des Signals und eines ersten Kandidaten-Samples für den Anfang des Frames, wobei die erste Phase (110) Folgendes beinhaltet:
∘ für jede einer Vielzahl von zuvor bestimmten Frequenz-Hypothesen: eine Korrelation (113) zwischen den Samples, die nach dem Filtern (102) einer Formatierung erhalten werden, und mindestens einem Teil der Präambel,
∘ ein Schätzen (114) einerseits eines ersten Kandidaten-Samples für den Anfang eines Frames entsprechend einem Sample, dessen bester erhaltener Korrelationswert aus den verschiedenen Frequenz-Hypothesen größer als eine zuvor bestimmte Schwelle ist, und andererseits eines ungefähren Frequenzfehlers ausgehend von der Frequenz-Hypothese, die den besten Korrelationswert ergeben hat,
wobei das Verfahren (100) **dadurch gekennzeichnet ist, dass** es Folgendes beinhaltet:
• eine zeitliche Sicherung (103) der am Ausgang des Abtastens (101) oder am Ausgang des Filterns (102) einer Formatierung erhaltenen Samples in einem Pufferspeicher, während die erste Phase ausgeführt wird,
• eine zweite Phase (120) zum genauen Schätzen eines endgültigen Kandidaten-Samples für den Anfang des Frames, wobei die zweite Phase (120) Folgendes beinhaltet:
∘ eine Frequenzkorrektur (121), die auf die am Ausgang des Pufferspeichers erhaltenen Samples angewendet wird, wobei die Frequenzkorrektur (121) ausgehend von dem ungefähren Frequenzfehler bestimmt wird, der in der ersten Phase geschätzt wird,
∘ eine Korrelation (123) zwischen den korrigierten Samples und der Präambel für eine begrenzte Reihe von Samples, die das erste Kandidaten-Sample umfasst,
∘ ein Bestimmen (124) des endgültigen Kandidaten-Samples für den Anfang des Frames entsprechend dem Sample, bei dem der beste Korrelationswert erhalten wird.

2. Verfahren (100) nach Anspruch 1, wobei die erste Phase (110) weiter eine Dezimierung (111) der am Ausgang des Filterns (102) einer Formatierung erhaltenen Samples vor den Korrelationen (113) für die verschiedenen Frequenz-Hypothesen beinhaltet.

3. Verfahren (100) nach einem der Ansprüche 1 bis 2, wobei die zeitliche Sicherung (103) der Samples am Ausgang des Filterns (102) einer Formatierung durchgeführt wird.

4. Verfahren (100) nach einem der Ansprüche 1 bis 2, wobei die zeitliche Sicherung (103) der Samples am Ausgang der Abtastung (101) durchgeführt wird, und die zweite Phase (120) weiter ein Filtern (122) der Formatierung der am Ausgang der Frequenzkorrektur (121) erhaltenen Samples beinhaltet.

5. Verfahren (100) nach einem der Ansprüche 1 bis 4, wobei die während der ersten Phase (110) durchgeführten Korrelationen (113) nur an einem Teil der Präambel realisiert werden.

6. Verfahren (100) nach einem der Ansprüche 1 bis 5, wobei die erste Phase (110) weiter eine Reduzierung (112) der Größe der Reihe von Werten beinhaltet, die verwendet werden, um die nach dem Filtern (102) einer Formatierung erhaltenen Samples zu quantifizieren, bevor die Korrelationen (113) durchgeführt werden.

7. Verfahren (100) nach einem der Ansprüche 1 bis 6, wobei die Anzahl und die Werte der Frequenz-Hypothesen zuvor in Abhängigkeit eines geschätzten Signal-Geräusch-Verhältnisses, einer gewünschten maximalen Frames-Fehlerquote, und eines beabsichtigten maximalen Frequenzfehlers bestimmt werden.

8. Verfahren (100) nach einem der Ansprüche 1 bis 7, wobei die Korrelation (123), die während der zweiten Phase (120) durchgeführt wird, eine erste Korrelation über einen ersten Teil der Präambel, und eine zweite Korrelation über einen zweiten Teil der Präambel beinhaltet, wobei ein endgültiger Korrelationswert in Abhängigkeit von den jeweils für die erste Korrelation und für die zweite Korrelation erhaltenen Korrelationswerten berechnet wird.

9. Verfahren (100) nach einem der Ansprüche 1 bis 8, wobei die zweite Phase (120) weiter eine Schätzung einer zum Zeitpunkt des endgültigen Kandidaten-Samples hinzuzufügenden oder abzuziehenden Fraktionsverzögerung beinhaltet, um den Anfang des Frames zu bestimmen, wobei die Fraktionsverzögerung einer Fraktion des Abtastzeitraums entspricht.

10. Verfahren (100) nach einem der Ansprüche 1 bis 9, wobei der Frame eine Bitfolge entsprechend der Präambel und eine Bitfolge entsprechend den Nutzdaten beinhaltet, wobei die Bitfolge der Präambel durch eine BPSK-Modulation moduliert ist, die Bitfolge von Nutzdaten durch eine Modulation höherer Ordnung moduliert ist, bei der ein Modulationssymbol mindestens zwei Bits kodiert.

11. Computerprogrammprodukt, das eine Reihe von Programmcodeanweisungen beinhaltet, die, wenn sie von einem Prozessor ausgeführt werden, den Prozessor konfigurieren, um ein Verfahren (100) zum Erfassen des Anfangs eines Frames eines Kommunikationssignals nach einem der Ansprüche 1 bis 10 umzusetzen.

12. Empfängervorrichtung (10) zum Erfassen des Anfangs eines Frames eines Kommunikationssignals, wobei der Frame eine Präambel beinhaltet, die einer zuvor bestimmten Folge an binären Symbolen entspricht, wobei die Empfängervorrichtung eine Verarbeitungsschaltung beinhaltet, die Folgendes beinhaltet:
• ein Abtastmodul (111) zum Abtasten des Signals,
• ein Filter (12) zum Formatieren, zum Filtern der direkt am Ausgang des Abtastmoduls (111) erhaltenen Samples,
• mehrere Korrelatoren (16), die jeweils verschiedenen Frequenz-Hypothesen zugeordnet sind, um für die am Ausgang des Filters (12) zum Formatieren erhaltenen Samples, und für jede Frequenz-Hypothese eine Korrelationsberechnung mit mindestens einem Teil der Präambel durchzuführen,
• ein Schätzmodul (17), konfiguriert zum:
∘ Schätzen eines ersten Kandidaten-Samples für den Anfang eines Frames entsprechend einem Sample, dessen bester erhaltener Korrelationswert aus den verschiedenen Frequenz-Hypothesen größer als eine zuvor bestimmte Schwelle ist,
∘ Schätzen eines ungefähren Frequenzfehlers ausgehend von der Frequenz-Hypothese, die den besten Korrelationswert ergeben hat,
wobei die Empfänger-Vorrichtung (10) **dadurch gekennzeichnet ist, dass** sie Folgendes beinhaltet:
• einen Pufferspeicher (18) zur zeitlichen Sicherung der am Ausgang des Abtastmoduls (111) oder am Ausgang des Filters (12) einer Formatierung erhaltenen Samples,
• ein Frequenzkorrekturmodul (19), das konfiguriert ist, um auf die am Ausgang des Pufferspeichers (18) erhaltenen Samples eine Frequenzkorrektur ausgehend von dem geschätzten ungefähren Frequenzfehler anzuwenden,
• einen Korrelator (21), der konfiguriert ist, um für jedes Sample einer begrenzten Reihe von korrigierten Samples, die das erste Kandidaten-Sample umfasst, eine Korrelationsberechnung mit der Präambel durchzuführen,
• ein Erfassungsmodul (22), das konfiguriert ist, um ein endgültiges Kandidaten-Sample für den Anfang des Frames entsprechend dem Sample, bei dem der beste Korrelationswert erhalten wird, zu bestimmen.

13. Empfängervorrichtung (10) nach Anspruch 12, die weiter ein Dezimierungsmodul (13) zum Dezimieren der am Ausgang des Filters (12) einer Formatierung erhaltenen Samples vor Behandlung durch die Korrelatoren (16), die den verschiedenen Frequenz-Hypothesen zugeordnet sind, beinhaltet.

14. Satellit (40) oder Luftfahrzeug, der eine Empfängervorrichtung (10) nach einem der Ansprüche 12 bis 13 beinhaltet.

15. Bodenstation (30), die eine Empfängervorrichtung (10) nach einem der Ansprüche 12 bis 13 beinhaltet.

## Claims

1. A method (100) for detecting the start of a frame of a communication signal, said frame including a preamble corresponding to a predetermined sequence of binary symbols, said method including:
• a sampling (101) of the signal,
• a filtering (102) for shaping the samples obtained directly at the output of the sampling (101),
• a first phase (110) for estimating an approximate frequency error of the signal and a candidate first sample for the start of the frame, said first phase (110) including:
o for each of a plurality of predetermined frequency hypotheses: a correlation (113) between the samples obtained after shaping filtering (102) and at least one portion of the preamble,
o an estimation (114) on the one hand of a candidate first sample for the start of the frame corresponding to a sample for which the best correlation value obtained among the different frequency hypotheses is higher than a predetermined threshold and, on the other hand, of the approximate frequency error from the frequency hypothesis having provided the best correlation value,
the method (100) being **characterized in that** it includes:
• a temporal recording (103) of the samples obtained at the output of the sampling (101) or at the output of the shaping filtering (102) in a buffer memory while the first phase is executed,
• a second phase (120) for accurately estimating a final candidate sample for the start of the frame, said second phase (120) including:
o a frequency correction (121) applied to the samples obtained at the output of the buffer memory, said frequency correction (121) being determined from the approximate frequency error estimated at the first phase,
o a correlation (123) between the corrected samples and the preamble for a limited set of samples comprising the candidate first sample,
o a determination (124) of the final candidate sample for the start of the frame corresponding to the sample for which the best correlation value is obtained.

2. The method (100) according to claim 1, wherein the first phase (110) further includes a decimation (111) of the samples obtained at the output of the shaping filtering (102), before the correlations (113) for the different frequency hypotheses.

3. The method (100) according to one of claims 1 to 2, wherein the temporal recording (103) of the samples is performed at the output of the shaping filtering (102).

4. The method (100) according to one of claims 1 to 2, wherein the temporal recording (103) of the samples is performed at the output of the sampling (101) and the second phase (120) further includes a filtering (122) for shaping the samples obtained at the output of the frequency correction (121).

5. The method (100) according to one of claims 1 to 4, wherein the correlations (113) performed during the first phase (110) are carried out on only one portion of the preamble.

6. The method (100) according to one of claims 1 to 5, wherein the first phase (110) further includes a reduction (112) of the size of the set of values used to quantify the samples obtained after the shaping filtering (102), before performing the correlations (113) .

7. The method (100) according to one of claims 1 to 6, wherein the number and the values of the frequency hypotheses are predetermined as a function of an estimated signal-to-noise ratio, a desired maximum frame error rate, and a considered maximum frequency error.

8. The method (100) according to one of claims 1 to 7, wherein the correlation (123) performed during the second phase (120) includes a first correlation on a first portion of the preamble and a second correlation on a second portion of the preamble, a final correlation value being calculated as a function of the correlation values obtained respectively for the first correlation and for the second correlation.

9. The method (100) according to one of claims 1 to 8, wherein the second phase (120) further includes an estimation of a fractional delay to be added or subtracted from the time point of the final candidate sample to determine the start of the frame, said fractional delay corresponding to a fraction of the sampling period.

10. The method (100) according to one of claims 1 to 9, wherein the frame includes a sequence of bits corresponding to the preamble and a sequence of bits corresponding to payload data, the sequence of the preamble bits being modulated by a BPSK modulation, the sequence of payload data bits being modulated by a higher-order modulation for which a modulation symbol encodes at least two bits.

11. A computer program product including a set of program code instructions which, when executed by a processor, configure said processor to implement a method (100) for detecting the start of a frame of a communication signal according to one of claims 1 to 10.

12. A receiver device (10) for detecting the start of a frame of a communication signal, said frame including a preamble corresponding to a predetermined sequence of binary symbols, the receiver device including a processing circuit including:
• a sampling module (11) to sample the signal,
• a shaping filter (12) to filter the samples obtained directly at the output of the sampling module (11),
• several correlators (16) respectively associated with different frequency hypotheses, to perform, for the samples obtained at the output of the shaping filter (12), and for each frequency hypothesis, a calculation of correlation with at least one portion of the preamble,
• an estimation module (17) configured to:
o estimate a candidate first sample for the start of the frame corresponding to a sample for which the best correlation value obtained among the different frequency hypotheses is higher than a predetermined threshold,
o estimate an approximate frequency error from the frequency hypothesis having provided the best correlation value,
the receiver device (10) being **characterized in that** it includes:
• a buffer memory (18) to temporally record the samples obtained at the output of the sampling module (11) or at the output of the shaping filter (12),
• a frequency correction module (19) configured to apply to the samples obtained at the output of the buffer memory (18) a frequency correction determined from the estimated approximate frequency error,
• a correlator (21) configured to perform, for each sample of a limited set of corrected samples comprising the candidate first sample, a calculation of correlation with the preamble,
• a detection module (22) configured to determine a final candidate sample for the start of the frame corresponding to the sample for which the best correlation value is obtained.

13. The receiver device (10) according to claim 12, further including a decimation module (13) for decimating the samples obtained at the output of the shaping filter (12), before processing by the correlators (16) associated with the different frequency hypotheses.

14. A satellite (40) or aircraft including a receiver device (10) according to one of claims 12 to 13.

15. A ground station (30) including a receiver device (10) according to one of claims 12 to 13.
